# EUROPÄISCHE PATENTSCHRIFT

(11) **EP 3 187 843 B1**
(45) Veröffentlichungstag und Bekanntmachung des Hinweises auf die Patenterteilung: **01.03.2023**
(21) Anmeldenummer: 16202394.9
(22) Anmeldetag: 06.12.2016
(51) Int. Cl.: G01J 3/02, A01G 13/02, G01J 3/50, G01J 1/10, G01J 3/28, G01J 3/42

(54) **VERFAHREN ZUM BETREIBEN EINER ABDECKFOLIENSENSOREINRICHTUNG FÜR AGRARANWENDUNGEN**
METHOD FOR OPERATING A COVERING FILM SENSOR DEVICE FOR AGRICULTURAL APPLICATIONS
PROCÉDÉ DE FONCTIONNEMENT D'UN CAPTEUR DE FILM DE RECOUVREMENT POUR APPLICATIONS AGRAIRES

(30) Priorität: 22.12.2015 DE 102015226431
(43) Veröffentlichungstag der Anmeldung: 05.07.2017
(73) Patentinhaber: Robert Bosch GmbH, 70442 Stuttgart (DE)
(72) Erfinder: Winkler, Achim, 71254 Ditzingen (DE)

(56) Entgegenhaltungen:
- DE-A1- 4 222 258
- DE-A1-102004 004 675
- ADOLF HEISSNER ET AL: "Comparison of plastic films with different optical properties for soil covering in horticulture: test under simulated environmental conditions : Plastic films with different optical properties for soil covering", JOURNAL OF THE SCIENCE OF FOOD AND AGRICULTURE, Bd. 85, Nr. 4, 10. Dezember 2004 (2004-12-10), Seiten 539-548, XP055375464, GB ISSN: 0022-5142, DOI: 10.1002/jsfa.1862

## Beschreibung

Die Erfindung betrifft ein Verfahren zum Betreiben einer Abdeckfoliensensoreinrichtung für Agraranwendungen.

### Stand der Technik

Abdeckfolien für Agraranwendungen sind aus: A. Heissner et al: "Comparison of plastic films with different optical properties for soil covering in horticulture: test under simulated environmental conditions: Plastic films with different optical properties for soil covering", JOURNAL OF THE SCIENCE OF FOOD AND AGRICULTURE, Bd. 85, Nr. 4, 10. Dezember 2004 (2004-12-10), Seiten 539-548, wobei dieser Artikel den Oberbegriff des Anspruchs 1 offenbart, oder aus der DE 42 22 258 A1 bekannt. Diese werden insbesondere beim Spargelanbau verwendet, um beispielsweise die Temperatur des Bodens einer Anbaufläche zu regulieren. Dafür weist die Abdeckfolie üblicherweise auf der einen Seite eine weiße und auf der anderen Seite eine schwarze Oberfläche auf, wobei jede Seite aufgrund der Färbung der Oberfläche unterschiedliche Reflektions- bzw. Absorptionseigenschaften aufweist. Wird die Abdeckfolie so auf die Anbaufläche ausgelegt, dass die weiße Oberfläche nach oben weist, so wird ein größerer Teil des auf sie einfallenden Sonnenlichts reflektiert und nur ein geringer Teil absorbiert. Dadurch wird die Temperatur des Bodens unterhalb der Abdeckfolie abgesenkt. Liegt die Abdeckfolie so auf der Anbaufläche auf, dass die schwarze Oberfläche nach oben weist, so wird ein größerer Teil des Sonnenlichts absorbiert und nur ein geringer Teil reflektiert. Dadurch wird die Temperatur des Bodens unterhalb der Abdeckfolie erhöht.

### Offenbarung der Erfindung

Die vorliegende Erfindung ist in Anspruch 1 definiert.

Es ist ein Sensor zur Erfassung einer Lichtintensität vorgesehen, mit einer Lichtquelle zur Erzeugung eines Lichtstrahls, wobei der Sensor und die Lichtquelle derart ausgerichtet sind, dass der Sensor von einer Oberfläche reflektiertes Licht der Lichtquelle erfasst, und mit einer Auswerteeinrichtung, die in Abhängigkeit der erfassten Lichtintensität das Vorhandensein und die Oberflächenfärbung einer Abdeckfolie bestimmt. Das erfindungsgemäße Verfahren mit den Merkmalen des Anspruchs 1 hat den Vorteil, dass die Bestimmung des Vorhandenseins und der Oberflächenfärbung der Abdeckfolie mit einem geringen Kosten-, Arbeits- und/oder Zeitaufwand möglich ist. So wird insbesondere in Abwesenheit einer Person festgestellt, welche Seite der Abdeckfolie aufliegt und/oder ob die Abdeckfolie vorhanden ist. Insbesondere ist dabei auch die Bestimmung über das Vorhandensein einer transparenten Abdeckfolie möglich, welche zumindest im Wesentlichen ohne Einfärbung ist. Die Lichtquelle ist dabei insbesondere als lichtemittierende Diode und der Sensor als Photodiode ausgebildet.

Weiterhin ist vorgesehen, dass die Auswerteeinrichtung einen nicht-flüchtigen Speicher aufweist, in welchem Vergleichsdaten zum Bestimmen des Vorhandenseins und der Oberflächenfärbung der Abdeckfolie in Abhängigkeit von Lichtintensitäten hinterlegt sind. Der Vorteil hierbei ist, dass es nun in Abhängigkeit der Vergleichsdaten möglich ist, die durch die Auswerteeinrichtung erfassten Daten zu einer Information über den genauen Zustand der Abdeckfolie zu verarbeiten. Der nicht-flüchtige Speicher ist beispielsweise als Festplatte, als allgemeines Speichermedium oder als Halbleiterbauelement, das wenigstens einen Transistor aufweist, ausgebildet.

Weiterhin ist vorgesehen, dass die Vergleichsdaten drei unterschiedliche Lichtintensitätsbereiche aufweisen, wobei einem ersten Lichtintensitätsbereich eine schwarze Oberflächenfärbung der Abdeckfolie, einem zweiten Lichtintensitätsbereich ein Nichtvorhandensein der Abdeckfolie, und einem dritten Intensitätsbereich eine weiße Oberflächenfärbung der Abdeckfolie zugeordnet ist. Der Vorteil hierbei ist, dass durch die erfasste Lichtintensität direkt bestimmt wird, ob die Abdeckfolie aufliegt und/oder welche Oberflächenseite der Abdeckfolie nach außen zeigt. Indem nur drei Lichtintensitätsbereiche vorliegen, ist eine einfache Unterscheidung der von dem Sensor erfassten Lichtintensitäten möglich. Insbesondere wird es bei Übergängen, beispielsweise bei einem Übergang von dem ersten zu dem dritten Lichtintensitätsbereich, zu voneinander abweichenden Lichtintensitäten des reflektierten Lichts kommen, weshalb die Zuordnung durch den nicht-flüchtigen Speicher mit geringem Rechenaufwand zu bestimmen ist. Um auszuschließen, dass die Lichtintensität des an einer schwarzen Oberflächenseite der Abdeckfolie reflektierten Lichts mit der Lichtintensität eines Nachthimmels verwechselt wird, erkennt die Auswerteeinrichtung neben den Lichtintensitäten bevorzugt auch das Frequenzspektrum des erfassten Lichts. So wird auf Licht erkannt, das nicht von der Lichtquelle emittiert wird, wenn das Frequenzspektrum des erfassten Lichts Frequenzen aufweist, die nicht mit denen der Lichtquelle übereinstimmen. Liegt die Lichtquelle beispielsweise als ausschließlich rotes Licht emittierende Leuchtdiode vor, so wird von der Auswerteeinrichtung auf ein Nicht-Vorhandensein der Abdeckfolie erkannt, wenn das Frequenzspektrum des von dem Sensor erfassten Lichts neben der Frequenz für rotes Licht Frequenzen aufweist, die anderen Farben zugeordnet sind. Auch ist es bevorzugt vorgesehen, dass die Auswerteeinrichtung dann auf ein Nicht-Vorhandensein der Abdeckfolie schließt, wenn der Frequenzanteil des beispielsweise roten Lichts vollständig fehlt oder unterhalb eines vorgebbaren Intensitätsbereichs liegt. Gegebenenfalls ist ein vierter Lichtintensitätsbereich für transparente Abdeckfolien vorgesehen, deren Reflektionsverhalten sich von dem der Abdeckfolien mit schwarzer oder weißer Oberflächenfärbung unterscheidet. Um auszuschließen, dass die Lichtintensität des an einer transparenten Abdeckfolie reflektierten Lichts mit der Lichtintensität von Tageslicht verwechselt wird, wird auch hier bevorzugt durch die Auswerteeinrichtung erkannt, ob das erfasste Frequenzspektrum mit dem Frequenzspektrum der Lichtquelle, vorliegend beispielsweise einer rotes Licht emittierenden Leuchtdiode, übereinstimmt. Die Auswerteeinrichtung schließt somit dann auf ein Vorhandensein der transparenten Abdeckfolie, wenn der Frequenzanteil des beispielsweise von der Lichtquelle emittierten roten Lichts erkannt wird oder innerhalb eines vorgebbaren Intensitätsbereichs liegt.

Besonders bevorzugt ist eine Energiequelle, insbesondere ein Energiespeicher, vorhanden. Der Vorteil hierbei ist, dass der Sensor und die Lichtquelle ohne oder nahezu ohne Unterbrechung betrieben werden können, wodurch eine zuverlässige Kontrolle der Anbaufläche gewährleistet wird. Die Energiequelle ist bevorzugt als Peltierelement oder Solarmodul, der Energiespeicher vorzugsweise als wieder aufladbare Batterie ausgebildet. Alternativ ist ein Stromanschluss vorgesehen, welcher bevorzugt durch eine Stromkabelverbindung mit einem Stromversorger hergestellt wird.

Gemäß einer bevorzugten Weiterbildung der Erfindung ist ein Funkmodul zur drahtlosen Übertragung von Informationen bezüglich der bestimmten Oberflächenfärbung und/oder dem Vorhandensein der Abdeckfolie vorhanden. Der Vorteil hierbei ist, dass eine einfache Kontaktierung des Funkmoduls zur drahtlosen Übertragung von Informationen möglich ist. Im Wesentlichen benötigt das Funkmodul eine Energiequelle und eine drahtlose Verbindung zu einer Übertragungsschnittstelle. Insbesondere wird dadurch vermieden, Kabel zur Informationsübertragung zu verlegen, so dass ein Verbrauch und/oder Verschleiß an Material minimiert wird. Dadurch können sowohl die Lebensdauer des Materials erhöht als auch die Materialkosten verringert werden. Durch das Funkmodul ist es möglich, die Information über das Vorhandensein und die Oberflächenfärbung der Abdeckfolie nahezu von jedem Ort aus und zu jeder Tageszeit abzurufen oder zu kontrollieren. Dabei werden die Informationen bzw. die ermittelten Daten bevorzugt an einen zentralen Datenbankserver, welcher mit der Übertragungsschnittstelle verbunden ist, übertragen, wobei die Daten durch einen mobilen Empfänger wie beispielsweise ein Mobilfunktelefon, ein Tablet oder eine Smartwatch abgerufen werden können. Auch ist eine Zustellung der Informationen von dem Datenbankserver an den mobilen Empfänger über eine Push Nachricht möglich. In Abhängigkeit der Information ist es somit möglich, insbesondere rechtzeitig eine Maßnahme zu treffen, beispielsweise eine von der Anbaufläche entfernte Abdeckfolie wieder anzubringen. Damit werden insbesondere die Regulierung des Anbaus eines landwirtschaftlichen Produktes und damit der Ertrag verbessert, weil nunmehr eine Maßnahme unmittelbar mit Erhalt der Information getroffen und umgesetzt wird. Beispielsweise wird somit bestimmt, ob der Boden durch die ausgelegte Abdeckfolie vor Schädlingen und/oder Erosionen geschützt ist oder geschützt werden soll.

Besonders bevorzugt sind ein Temperatursensor und/oder ein Bodenfeuchtesensor vorhanden. Dadurch werden neben der Information über die Lichtintensität zudem durch den Temperatursensor die Information über die Bodentemperatur und/oder die Lufttemperatur und/oder durch den Bodenfeuchtesensor die Information über die Bodenfeuchtigkeit übermittelt. Liegt beispielsweise die Information vor, dass die gewünschte Oberflächenseite der Abdeckfolie aufliegt, dass aber die Temperatur des Bodens zu hoch ist, so kann aufgrund dessen die Maßnahme getroffen werden, die Abdeckfolie zu wenden. Indem durch die Ausbringung der Abdeckfolie klimatische Verhältnisse, denen der Boden ausgesetzt ist, reguliert werden, kann somit auch der Ertrag der bebaubaren Fläche reguliert werden. So wird es möglich zu erfassen, ob aufgrund der Temperatur die für den Anbau des landwirtschaftlichen Produkts geeignete Seite der Abdeckfolie nach oben weist. Der Bodenfeuchtesensor liefert beispielsweise Informationen über den Wassergehalt, den Salzgehalt und/oder die Saugspannung des Bodens. Bevorzugt ist vorgesehen, dass die Informationen des Temperatursensors und/oder des Bodenfeuchtesensors ebenfalls durch das Funkmodul drahtlos übertragen werden. Zusätzlich ist es möglich, dass die Bestimmung durch die Auswerteeinrichtung, welche Oberflächenseite der Abdeckfolie aufliegt, durch den Temperatursensor und/oder den Bodenfeuchtesensor plausibilisiert wird. Bestimmt die Auswerteeinrichtung beispielsweise, dass die schwarze Oberflächenseite der Abdeckfolie nach außen weist und erfasst der Temperatursensor, dass der Erdboden warm ist bzw. sich erwärmt, so wird durch den Temperatursensor plausibilisiert, dass die schwarze Oberflächenseite tatsächlich nach außen weist. Wird durch die Auswerteeinrichtung festgestellt, dass ein Temperaturwert und/oder ein durch den Bodenfeuchtesensor ermittelter Wert einen vorgebbaren Grenzwert über- oder unterschreitet oder wird festgestellt, dass die Abdeckfolie gewendet werden muss, so wird bevorzugt ein Warnsignal, beispielsweise in Form eines akustischen oder visuellen Alarms, erzeugt, welches vor Ort erzeugt und/oder an den mobilen Empfänger gesendet wird. Damit wird eine frühzeitige Warnung gewährleistet, wodurch beispielsweise Ernteausfälle verhindert werden können.

Vorzugsweise weist die Abdeckfoliensensoreinrichtung eine auf dem Agrarboden abstellbare Halteeinrichtung auf, an welcher der Sensor und die Lichtquelle nach unten oder nach oben weisend angeordnet sind. Dies hat den Vorteil, dass der Sensor und die Lichtquelle an verschiedenen Stellen im Bereich der Abdeckfolie angeordnet werden. So werden beispielsweise der Sensor und die Lichtquelle so positioniert, dass sie nach unten weisen und somit oberhalb der Folie angeordnet sind. Andererseits ist es möglich, dass der Sensor und die Lichtquelle nach oben weisend angeordnet sind, sodass diese beispielsweise unterhalb der Abdeckfolie und somit unsichtbar oder nahezu unsichtbar positioniert werden können. Dabei wird die Abdeckfolie an ihrer Unterseite angestrahlt. Insbesondere wird durch eine Positionierung unterhalb der Abdeckfolie Schutz für die Abdeckfoliensensoreinrichtung vor Wettereinflüssen geboten, beispielsweise vor Regen und/oder Wind. Bevorzugt sind der Sensor und die Lichtquelle an der Halteeinrichtung verschwenkbar angeordnet sind, so dass die Halteeinrichtung in Abhängigkeit einer bevorzugten Positionierung sowohl oberhalb als auch unterhalb der Abdeckfolie angebracht wird. Um die Halteeinrichtung aufstellen zu können, weist diese vorzugsweise einen ausklappbaren Haltefuß auf. Dabei ist die Halteeinrichtung vorzugsweise aufstellbar, wenn der Haltefuß ausgeklappt ist, und in den Erdboden einsteckbar, wenn der Haltefuß eingeklappt ist.

Das erfindungsgemäße Verfahren mit den Merkmalen des Anspruchs 1 zeichnet sich dadurch aus, dass der Sensor und die Lichtquelle derart ausgerichtet werden, bis der Sensor von einer Oberfläche reflektiertes Licht der Lichtquelle erfasst, wobei in Abhängigkeit von der erfassten Lichtintensität bestimmt wird, ob eine Abdeckfolie vorhanden ist und/oder welche Oberflächenfärbung eine vorhandene Abdeckfolie aufweist. Es ergeben sich die bereits genannten Vorteile. Weitere Vorteile und bevorzugte Merkmale ergeben sich insbesondere aus dem zuvor Beschriebenen sowie aus den Ansprüchen.

Erfindungsgemäß ist vorgesehen, dass die erfasste Lichtintensität mit vorgebbaren Intensitätsbereichen verglichen und in Abhängigkeit des Vergleichs das Vorhandensein und/oder die Oberflächenfärbung bestimmt werden. Der Vorteil ist hierbei, dass auf einfache Weise eine Auswertung der erfassten Lichtintensitäten erfolgt. Dabei wird eine Lichtintensität erfasst, welche dann dem entsprechenden Intensitätsbereich zugeordnet wird, wodurch eine Aussage über das Vorhandensein und/oder die Oberflächenfärbung getroffen wird. Außerdem wird die erfasste Lichtintensität in ihre Frequenzanteile aufgespalten. Demnach wird überprüft, welche Frequenzen vorliegen. Liegen beispielsweise nur Frequenzen vor, welche dem emittierten Licht der Lichtquelle entsprechen und entspricht die erfasste Intensität dem an der weißen Oberflächenseite der Abdeckfolie reflektierten Licht, so wird auf die weiße Seite der Abdeckfolie geschlossen, welche angestrahlt wird. Wobei dann, wenn der

Sensor oberhalb der Abdeckfolie positioniert ist und das reflektierte Licht der weißen Seite der Abdeckfolie erfasst, darauf geschlossen wird, dass die weiße Seite der Abdeckfolie nach außen weist, während dann, wenn der Sensor unterhalb der Abdeckfolie positioniert ist und das reflektierte Licht der schwarzen Seite der Abdeckfolie erfasst, auch darauf geschlossen wird, dass die weiße Seite nach außen weist. Dabei sind die Auswertelogiken zur Bestimmung der Oberflächenseite bei oberhalb der Abdeckfolie positioniertem Sensor und unterhalb der Abdeckfolie positioniertem Sensor invers zueinander ausgebildet. Liegen Frequenzen vor, welche nicht ausschließlich dem emittierten Licht der Lichtquelle entsprechen und liegt die erfasste Intensität weder in dem Bereich der weißen noch der schwarzen Oberflächenseite der Abdeckfolie, so wird auf ein Nicht-Vorhandensein der Abdeckfolie geschlossen.

Besonders bevorzugt ist vorgesehen, dass die bestimmte Oberflächenfärbung oder das Nichtvorhandensein der Abdeckfolie an eine zentrale Datenbank insbesondere drahtlos gesendet werden. Der Vorteil hierbei ist, dass die Übertragung von Informationen über die Oberflächenfärbung oder das Nichtvorhandensein der Abdeckfolie drahtlos erfolgt, so dass beispielsweise ein Verlegen von Kabeln vermieden wird, wodurch der Verbrauch und/oder Verschleiß von Material minimiert wird. Das Senden der Informationen erfolgt bevorzugt mittels WLAN oder Funk, beispielsweise WLAN oder GSM (Global System for Mobile Communications). Die zentrale Datenbank erfasst dabei im Wesentlichen die gemessene reflektierte Intensität durch den Sensor und zusätzlich die Temperatur der Luft und/oder des Bodens.

Im Folgenden soll die Erfindung anhand der Zeichnung näher erläutert werden.

Dazu zeigen
- Figur 1: einen Aufbau einer Abdeckfoliensensoreinrichtung in einer vereinfachten Seitenansicht und
- Figur 2: ein Ablaufdiagramm zur Durchführung eines vorteilhaften Verfahrens.

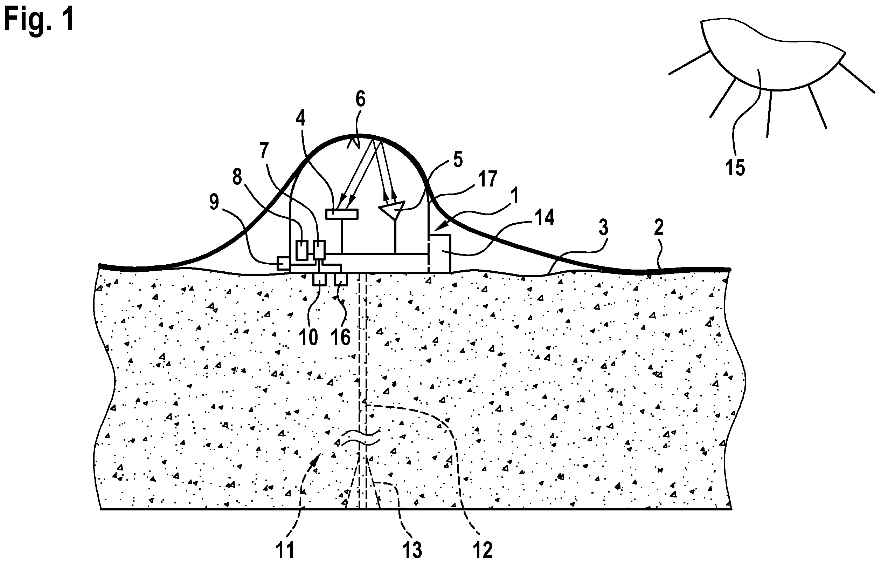

Figur 1 zeigt eine Abdeckfoliensensoreinrichtung 1. Diese wird von einer Abdeckfolie 2 überdeckt, welche eine Anbaufläche 3 überspannt. Die Abdeckfoliensensoreinrichtung 1 weist einen Sensor 4, insbesondere eine Photodiode, und eine Lichtquelle 5, insbesondere eine Leuchtdiode, auf. Bevorzugt sind der Sensor 4 und/oder die Lichtquelle 5 durch eine hier nicht gezeigt Aktorvorrichtung aus der Ferne steuerbar, beispielsweise über WLAN oder über Funk. Die in der Figur 1 gezeigten Proportionen entsprechen dabei nicht den in der Realität bevorzugten Verhältnissen und dienen ausschließlich zur Verbesserung der Anschaulichkeit.

Das von der Lichtquelle 5 emittierte Licht wird an der Oberfläche 6 der Abdeckfolie 2 reflektiert. Die Lichtquelle 5 und der Sensor 4 sind bevorzugt so zueinander ausgerichtet, dass das an der Oberfläche 6 reflektierte Licht von dem Sensor 4 erfasst wird.

Die Abdecksensoreinrichtung 1 weist weiterhin eine Auswerteeinrichtung 7 auf, welche bevorzugt mit einem nicht-flüchtigen Speicher ausgestattet ist. Der nicht-flüchtige Speicher ist dabei beispielsweise ein Halbleiterspeicher wie zum Beispiel ein Eeprom- oder Flash-Speicher. Die Auswerteeinrichtung 7 weist vorliegend ein Funkmodul 8 zur drahtlosen Übertragung von Informationen auf. Dabei ist das Funkmodul 8 mit einer hier nicht gezeigten Ausleseeinrichtung über eine Funkübertragungsstrecke verbunden. Das Funkmodul 8 weist bevorzugt eine Sende- und Empfangseinheit für Funksignale auf, welche bevorzugt durch eine WLAN-Verbindung oder aber auch durch Bluetooth oder GSM übertragen werden. Alternativ ist eine Nahfeldkommunikation des Funkmoduls 8 vorgesehen, so dass Daten an eine hier nicht gezeigt Datenbasisstation übertragen werden, welche die Daten sammelt und an einen Datenbankserver schickt.

Ein Lufttemperatursensor 9 dient der Abdeckfoliensensoreinrichtung 1 zur Erfassung der Lufttemperatur. Der Lufttemperatursensor 9 kann dabei beispielsweise ein PTC-Sensor (Positive Temperature Coefficient), ein NTC-Sensor (Negative Temperature Coefficient) oder ein Thermoelement sein. Zusätzlich zu dem Lufttemperatursensor 9 zur Messung der Lufttemperatur ist ein Bodentemperatursensor 10 vorgesehen, welcher die Bodentemperatur der Anbaufläche 3 erfasst. Der Lufttemperatursensor 9 und der Bodentemperatursensor 10 können auch in einer Temperatursensoreinheit zusammengefasst werden Ein zusätzlich vorgesehener Bodenfeuchtesensor 16, der vorliegend im Bereich des Bodentemperatursensors 10 angeordnet ist, dient zur Erfassung des Wassergehalts, des Salzgehalts und/oder der Saugspannung des Bodens.

Die Abdeckfoliensensoreinrichtung 1 ist vorliegend an einer Halteeinrichtung 11 befestigt, welche eine Haltestange 12 aufweist. Die Haltestange 12 weist bevorzugt einen insbesondere ausklappbaren Haltefuß 13 zum Aufstellen der Halteeinrichtung auf dem Boden auf. In eingeklapptem Zustand sind die Haltestange 12 und der Haltefuß 13 so ausgebildet, dass der Umfang der Haltestange 12 im Wesentlichen nicht vergrößert wird. Der Sensor 4 und die Lichtquelle 5 sind dabei nach unten oder nach oben weisend ausgerichtet.

Die Abdeckfoliensensoreinrichtung 1 ist mit einer Energiequelle 13 verbunden, insbesondere einem Energiespeicher wie beispielsweise einem Solarmodul oder einem Peltierelement.

Die Abdeckfoliensensoreinrichtung 1 wird so platziert, dass der Sensor 4 und die Lichtquelle 5 einen Abstand zu der Abdeckfolie 2 aufweisen, welcher eine zuverlässige Bestimmung des reflektierten Lichts erlaubt. Bevorzugt weist die Abdeckfoliensensoreinrichtung 1 eine transparente Kappe 17 auf, welche gewölbt, insbesondere zumindest bereichsweise halbkugelförmig ausgebildet ist und dadurch dafür sorgt, dass Verunreinigungen an dieser abgleiten können, so dass eine Messung nicht durch Verunreinigungen beeinflusst wird. In Abhängigkeit der erfassten Lichtintensität des reflektierten Lichts an der Oberfläche 6 wird das Vorhandensein und/oder die Oberflächenfärbung der Abdeckfolie 2 bestimmt. Die Abdeckfolie 2 weist dabei insbesondere eine weiße und eine schwarze Oberflächenseite auf.

Ist die Abdeckfolie nicht vorhanden, so wird kein Licht an der Abdeckfolie 2 im Bereich der Oberfläche 6 reflektiert. In diesem Fall wird beispielsweise bei einer Messung zu einer Mittagszeit die Lichtintensität der Sonnenstrahlung, welche von der Sonne 15 kommt, von dem Sensor 4 erfasst.

In der Auswerteeinrichtung 7, insbesondere in deren nicht-flüchtigem Speicher, sind Vergleichsdaten hinterlegt, durch welche auf ein Vorhandensein und/oder die Oberflächenfärbung der Abdeckfolie 2 geschlossen wird. Dazu weist die Auswerteeinrichtung die erfasste Strahlung des Sensors 4 insbesondere drei unterschiedlichen Lichtintensitätsbereichen zu.

Der Sensor 4 erfasst im Wesentlichen die Intensitäten des an der Oberfläche 6 der Abdeckfolie 2 reflektierten Lichts, sodass die Auswerteeinrichtung 7 die drei unterschiedlichen Lichtintensitätsbereiche mit der Intensität des erfassten Lichts vergleicht. Entspricht die Intensität des reflektierten Lichts dem ersten Lichtintensitätsbereich, welcher einer schwarzen Oberflächenfärbung der Abdeckfolie 2 zugeordnet ist, so erfasst die Auswerteeinrichtung 7, dass die Abdeckfolie 2 so auf der Anbaufläche 3 aufliegt, dass deren schwarze Seite nach innen und deren weiße Seite nach außen zeigt.

Wenn keine Abdeckfolie 2 vorhanden ist, wird keine reflektierte Strahlung vom Sensor 4 erfasst. In diesem Fall erfasst der Sensor 4 in Abhängigkeit einer Tageszeit beispielsweise die Lichtintensität der einfallenden Sonnenstrahlung.

Die Auswerteeinrichtung 7 weist optional eine Datenauswerteeinrichtung für Daten eines satellitengestützten Navigationssystems auf. So wird anhand von Wetterdaten und Tageszeitdaten bestimmt, welche Lichtintensitäten zu erwarten sind, wenn keine Abdeckfolie 2 aufliegt. Damit wird beispielsweise ausgeschlossen, dass die Lichtintensität des an einer schwarzen Oberflächenseite der Abdeckfolie 2 reflektierten Lichts mit der Lichtintensität eines Nachthimmels verwechselt wird. Optional erkennt die Auswerteeinrichtung 7 auf Licht, das nicht von der Lichtquelle 5 emittiert wird, wenn das Frequenzspektrum des erfassten Lichts Frequenzen aufweist, die nicht mit denen der Lichtquelle 5 übereinstimmen. Liegt die Lichtquelle 5 beispielsweise als ausschließlich rotes Licht emittierende Leuchtdiode vor, so wird von der Auswerteeinrichtung 7 auf ein Nicht-Vorhandensein der Abdeckfolie 2 erkannt, wenn das Frequenzspektrum des von dem Sensor 4 erfassten Lichts neben der Frequenz für rotes Licht Frequenzen aufweist, die anderen Farben zugeordnet sind. Auch ist es möglich, dass die Auswerteeinrichtung 7 dann auf ein Nicht-Vorhandensein der Abdeckfolie 2 schließt, wenn der Frequenzanteil des roten Lichts vollständig fehlt oder unterhalb eines vorgebbaren Intensitätsbereichs liegt.

Die Halteeinrichtung 11 kann alternativ so aufgestellt werden, dass sie außerhalb der Abdeckfolie 2 angeordnet ist. Dabei wird bei einem Nicht-Vorhandensein der Abdeckfolie 2 anstelle der Intensität der Sonneneinstrahlung bevorzugt die von der Anbaufläche 3 reflektierte Intensität erfasst.

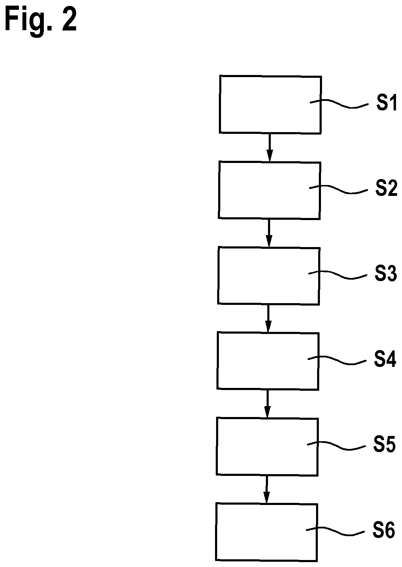

Figur 2 zeigt ein Ablaufdiagramm zum Betreiben der Abdeckfoliensensoreinrichtung 1. In einem ersten Schritt S1 wird von der Lichtquelle 5 Licht auf die Oberfläche 6 der Abdeckfolie 2 emittiert.

Das Licht wird an der Oberfläche 6 reflektiert und fällt in einem zweiten Schritt S2 auf den Sensor 4. In Abhängigkeit der Intensität des reflektierten Lichts wird in dem Sensor 4 beispielsweise ein der Lichtintensität proportionaler Photostrom erzeugt. Alternativ ist es möglich, die Intensität des reflektierten Lichts durch die Lichtquelle 5 mit darin integriertem Sensor 4 zu bestimmen, wodurch anstelle von zwei einzelnen Elementen, vorliegend Lichtquelle 5 und Sensor 4, eine Baueinheit vorliegt, welche Lichtquelle 5 und Sensor 4 vereint.

Die von dem Sensor 4 erfasste Lichtintensität wird in einem dritten Schritt S3 an die Auswerteeinrichtung 7 gesendet.

Die Auswerteeinrichtung wertet in einem vierten Schritt S4 die erhaltenen Daten der erfassten Lichtintensitäten aus und vergleicht diese mit vorgegebenen Intensitätsbereichen, wobei in Abhängigkeit des Vergleichs das Vorhandensein und/oder die Oberflächenfärbung der Abdeckfolie 2 bestimmt werden.

Stimmt die Intensität der reflektierten Strahlung überein mit dem vorgegebenen Intensitätsbereich für die schwarze Oberflächenfärbung der Abdeckfolie 2, so bestimmt die Auswerteeinrichtung 7, dass die schwarze Oberflächenseite der Abdeckfolie 2 dem Sensor 4 gegenüberliegt.

Stimmt die erfasste reflektierte Lichtintensität mit einem zweiten Bereich überein, bei dem die Lichtintensität einem Nicht-Vorhandensein der Abdeckfolie 2 entspricht, so schließt die Auswerteeinrichtung 7 daraus, dass die Abdeckfolie 2 fehlt.

Insbesondere bei einem Nicht-Vorhandensein der Abdeckfolie 2 wird der Sensor 4 in Abhängigkeit einer Tageszeit beispielsweise das von der Sonne 15 emittierte Licht erfassen und die Auswerteeinrichtung 7 die Intensität der Sonneneinstrahlung auswerten. So wird durch die Auswerteeinrichtung 7, insbesondere in Verbindung mit Daten eines satellitengestützten Navigationssystems, die während einer Tageszeit von dem Sensor 4 erfasste Lichtintensität einer direkten Sonneneinstrahlung und somit dem Nicht-Vorhandensein der Abdeckfolie 2 zugeordnet.

Andererseits wird die Auswerteeinrichtung 7 beispielsweise aus einer Nullintensität schließen, dass es Nacht ist und dass die Abdeckfolie 2 nicht vorhanden ist.

Wird beispielsweise festgestellt, dass die Nullintensität dadurch begründet ist, dass die Lichtquelle 5 kein Licht emittiert, wird dies von der Auswerteeinrichtung 7 gespeichert und als Information weitergegeben.

Ermittelt die Auswerteeinrichtung 7, dass das von dem Sensor 4 empfangene Licht übereinstimmt mit dem Intensitätsbereich, welcher der weißen Oberflächenfärbung der Abdeckfolie 2 zugeordnet ist, so bestimmt die Auswerteeinrichtung 7, dass die weiße Oberflächenseite der Abdeckfolie 2 dem Sensor 4 gegenüberliegt.

Vorzugsweise wird nach der Positionierung der Abdeckfoliensensoreinrichtung 1 die Position der Abdeckfoliensensoreinrichtung 1 an die Auswerteeinrichtung 7 übermittelt, insbesondere ob die Abdeckfoliensensoreinrichtung 1 ober- oder unterhalb der Abdeckfolie 2 liegt. Somit wird es möglich, dass die Auswerteeinrichtung 7 in Abhängigkeit des reflektierten Lichts die richtige Information darüber liefert, welche Oberflächenseite der Abdeckfolie 2 nach außen weist. Insbesondere erfolgt dabei eine Anpassung einer Auswertelogik.

Liegt beispielsweise die Abdeckfoliensensoreinrichtung 1 oberhalb der Abdeckfolie 2 und wurde die Position entsprechend an die Auswerteeinrichtung 7 übermittelt, so wird durch die Auswertelogik erfasst, dass das reflektierte Licht, beispielsweise weiß, von der Oberflächenseite kommt, die nach außen weist. Die Auswertelogik ist hierbei an eine Positionierung der Abdeckfoliensensoreinrichtung 1 oberhalb der Abdeckfolie angepasst.

Liegt beispielsweise die Abdeckfoliensensoreinrichtung 1 unterhalb der Abdeckfolie 2 und wurde die Position entsprechend an die Auswerteeinrichtung 7 übermittelt, so wird durch die Auswertelogik erfasst, dass das reflektierte Licht, beispielsweise schwarz, von der Oberflächenseite kommt, die nach innen weist. Demnach wird von der Auswerteeinrichtung 7 aus der Information des erfassten Signals, vorliegend, dass das reflektierte Licht von der schwarzen Oberflächenseite der Abdeckfolie 2 kommt, geschlossen, dass die weiße Oberflächenseite nach außen weist. Die Auswertelogik ist hierbei an eine Positionierung der Abdeckfoliensensoreinrichtung 1 unterhalb der Abdeckfolie angepasst.

In einem fünften Schritt S5 werden die Temperatur der Luft und/oder des Bodens sowie Informationen des Bodenfeuchtesensors 16 erfasst. Dadurch wird beispielsweise in Abhängigkeit der Temperatur der Luft und/oder des Bodens ermittelt, ob ein Wenden oder Entfernen der Abdeckfolie 2 nötig ist. Zudem wird bevorzugt durch die Erfassung der Temperatur der Luft und/oder des Bodens die Bestimmung der Auswerteeinrichtung 7 über die aufliegende Oberflächenseite oder das Nicht-Vorhandensein der Abdeckfolie 2 plausibilisiert. Bestimmt die Auswerteeinrichtung 7 beispielsweise, dass die schwarze Oberflächenseite der Abdeckfolie 2 nach außen weist und erfasst einer der Temperatursensor 9, 10, dass der Boden warm ist bzw. sich erwärmt, so wird durch den Temperatursensor 9, 10 plausibilisiert, dass die schwarze Oberflächenseite tatsächlich nach außen weist.

In einem sechsten Schritt S6 werden die ermittelten Daten an eine zentrale Datenbank insbesondere drahtlos gesendet. Dadurch wird es möglich, diese Daten an einer Auswertestation, beispielsweise einem Laptop, abzurufen. Somit erfolgt mit geringem Kosten-, Zeit- und Arbeitsaufwand eine zuverlässige Kontrolle der Anbaufläche 3. So wird beispielsweise ermittelt, ob eine Oberflächenseite der Abdeckfolie 2 gewendet oder ob eine Anbaufläche 3 mit der Abdeckfolie 2 bedeckt werden muss. Somit wird der Zustand der Abdeckung der Anbaufläche 3 automatisch festgestellt, ohne dass eine Person vor Ort ist. Zudem kann somit die Art der notwendigen Oberflächenseite der Abdeckfolie 2 zielgerichtet bestimmt werden, um bestimmte Einflüsse zu regulieren wie zum Beispiel die Befeuchtung durch Wasser, den Schutz vor Wärme, eine ausreichende Beleuchtung durch Licht oder den Schutz vor Wind.

Im Falle einer Funktionsunfähigkeit des Sensors 4 und/oder der Lichtquelle 5 oder bei Über- oder Unterschreiten eines Grenzwertes, beispielsweise bezüglich einer Temperatur des Bodens, wird dies beispielsweise durch ein Warnsignal an die Auswertestation durch die Auswerteeinrichtung 7 übermittelt.

Alternativ oder zusätzlich ist es neben der Bestimmung der Oberflächenfärbung der Abdeckfolie 2 möglich, festzustellen, ob eine transparente Abdeckfolie 2 vorhanden ist. Weil unabhängig von der aufliegenden Oberflächenseite der transparenten Abdeckfolie 2 die reflektierte Intensität des Lichts dieselbe ist, wird hierbei insbesondere das erfasste Frequenzspektrum des reflektierten Lichts ausgewertet. So ist beispielsweise der Auswerteeinrichtung 7 vorgebbar/vorgegeben, welche Frequenzen in Abhängigkeit des Materials der transparenten Abdeckfolie 2 zu erwarten sind, so dass der Sensor 4 bei Erfassen der entsprechenden Frequenzen auf die transparente Abdeckfolie 2 schließen kann.

## Patentansprüche

1. Verfahren zum Betreiben einer Abdeckfoliensensoreinrichtung, für Agraranwendungen, mit einem Sensor (4) zur Erfassung eines Lichts, mit einer Lichtquelle (5) zur Erzeugung eines Lichtstrahls, wobei der Sensor (2) und die Lichtquelle (5) derart ausgerichtet werden, dass der Sensor (4) von einer Oberfläche (6) einer Abdeckfolie (2) reflektiertes Licht der Lichtquelle (5) erfasst, **dadurch gekennzeichnet, dass** die Abdeckfoliensensoreinrichtung eine transparente Kappe (17) aufweist, so dass der Sensor (4) und die Lichtquelle (5) einen Abstand zu der Abdeckfolie (2) aufweisen, dass in Abhängigkeit von der Lichtintensität und des Frequenzspektrums des erfassten Lichts bestimmt wird, ob die Abdeckfolie (2) vorhanden ist und/oder welche Oberflächenfärbung die vorhandene Abdeckfolie (2) aufweist, wobei die Lichtintensität mit vorgebbaren Intensitätsbereichen verglichen und in Abhängigkeit des Vergleichs das Vorhandensein und/oder die Oberflächenfärbung der Abdeckfolie (2) bestimmt werden und dass einem ersten Lichtintensitätsbereich eine schwarze Oberflächenfärbung der Abdeckfolie (2), einem zweiten Lichtintensitätsbereich ein Nichtvorhandensein der Abdeckfolie (2), und einem dritten Intensitätsbereich eine weiße Oberflächenfärbung der Abdeckfolie (2) zugeordnet ist.

2. Verfahren nach einem der vorhergehenden Ansprüche, **dadurch gekennzeichnet, dass** die bestimmte Oberflächenfärbung oder das Nichtvorhandensein der Abdeckfolie (2) an eine zentrale Datenbank, insbesondere drahtlos gesendet werden.

3. Verfahren nach Anspruch 3, **dadurch gekennzeichnet, dass** die Abdeckfoliensensoreinrichtung ein Funkmodul (8) zur drahtlosen Übertragung von Informationen bezüglich der bestimmten Oberflächenfärbung und/oder dem Vorhandensein der Abdeckfolie (2) aufweist.

4. Verfahren nach einem der vorhergehenden Ansprüche, **dadurch gekennzeichnet, dass** die Lichtquelle (5) als ausschließlich rot emittierende Leuchtdiode ausgebildet ist.

## Claims

1. Method for operating a covering film sensor device, for agricultural applications, with a sensor (4) for detecting light, with a light source (5) for generating a light beam, the sensor (2) and the light source (5) being oriented in such a way that the sensor (4) detects light from the light source (5) that is reflected from a surface (6) of a covering film (2), **characterized in that** the covering film sensor device has transparent cap (17), such that the sensor (4) and the light source (5) are at a distance from the covering film (2), **in that** the method involves determining, depending on the light intensity and the frequency spectrum of the detected light, whether the covering film (2) is present and/or what surface coloration the covering film (2) present has, the light intensity being compared with predefinable intensity ranges and the presence and/or the surface coloration of the covering film (2) being determined depending on the comparison, and **in that** a black surface coloration of the covering film (2) is assigned to a first light intensity range, and absence of the covering film (2) is assigned to a second light intensity range, and a white surface coloration of the covering film (2) is assigned to a third intensity range.

2. Method according to any of the preceding claims, **characterized in that** the determined surface coloration or the absence of the covering film (2) is transmitted to a central database, in particular wirelessly.

3. Method according to Claim 3, **characterized in that** the covering film sensor device has a radio module (8) for wirelessly transferring information regarding the determined surface coloration and/or the presence of the covering film (2).

4. Method according to any of the preceding claims, **characterized in that** the light source (5) is embodied as a light-emitting diode that emits exclusively red.

## Revendications

1. Procédé de fonctionnement d'un dispositif de détection de film de recouvrement destiné à des applications agricoles et comprenant un capteur (4) destiné à détecter une lumière, une source de lumière (5) destinée à générer un faisceau lumineux, le capteur (2) et la source de lumière (5) étant orientés de manière à ce que le capteur (4) détecte la lumière de la source de lumière (5) qui est réfléchie par une surface (6) d'un film de recouvrement (2), **caractérisé en ce que** le dispositif de détection de film de recouvrement comporte un capuchon transparent (17) de sorte que le capteur (4) et la source de lumière (5) soient à une distance du film de recouvrement (2) telle qu'une détermination de la présence du film de recouvrement (2) et/ou de la couleur de surface du film de recouvrement (2) présent est effectuée en fonction de l'intensité lumineuse et du spectre de fréquence de la lumière détectée, l'intensité lumineuse étant comparée à des plages d'intensité spécifiables et la présence et/ou la couleur de surface du film de recouvrement (2) étant déterminées en fonction de la comparaison, et **en ce qu'**une couleur de surface noire du film de recouvrement (2) est associée à une première plage d'intensité lumineuse, une absence du film de recouvrement (2) est associée à une deuxième plage d'intensité lumineuse et une couleur de surface blanche du film de recouvrement (2) est associée à une troisième plage d'intensité.

2. Procédé selon l'une des revendications précédentes, **caractérisé en ce que** la couleur de surface déterminée ou l'absence du film de recouvrement (2) est transmise à une base de données centrale, notamment sans fil.

3. Procédé selon la revendication 3, **caractérisé en ce que** le dispositif de détection de film de recouvrement comporte un module radio (8) destiné à la transmission sans fil d'informations relatives à la couleur de surface spécifique et/ou à la présence du film de recouvrement (2) .

4. Procédé selon l'une des revendications précédentes, **caractérisé en ce que** la source de lumière (5) est réalisée sous la forme d'une diode électroluminescente émettant exclusivement dans le rouge.
